# EUROPEAN PATENT SPECIFICATION

(11) **EP 4 351 833 B1**
(45) Date of publication and mention of the grant of the patent: **09.09.2026**
(21) Application number: 21790470.5
(22) Date of filing: 12.10.2021
(51) Int. Cl.: B23Q 1/01, B23Q 1/52, B23Q 11/08, B23Q 39/02, B23Q 3/155, B23Q 3/157, B23Q 1/54

(54) **MULTIPLE-AXIS MACHINING CENTER WITH A TOOL MAGAZINE**
MULTI-ACHSEN BEARBEITUNGSZENTRUM MIT EINEM WERKZEUGMAGAZIN
CENTRE D'USINAGE MULTIAXIAL AVEC UN MAGASIN D'OUTILS

(30) Priority: 10.06.2021 IT 202100015131
(43) Date of publication of application: 17.04.2024
(73) Proprietor: Vigel S.p.A., 10071 Borgaro Torinese (IT)
(72) Inventor: STABIO, Diego, 10076 Nole (IT); FRANCESIA VILLA, Daniele, 10070 Mezzenile (IT)
(74) Representative: Modiano, Micaela Nadia
(86) International application number: PCT/EP2021/078169
(87) International publication number: WO 2022/258208

(56) References cited:
- DE-A1- 102017 122 439
- DE-A1- 19 800 034
- DE-B3- 102006 063 037

## Description

The present invention relates to a multiple-axis machining center with a mechanized tool magazine.

As is known, a multiple-axis machining center can comprise generally a motorized tool holding spindle mounted on a machining head which can move along two or more axes, with respect to the workpiece, so as to subject the workpiece to successive different machining processes such as milling, boring, tapping, and the like.

The axis of the spindle may be arranged horizontally or vertically.

It is also known to provide machining centers of the above cited type with a mechanized tool magazine, from which the spindle automatically picks up the tools to be used in the various machining steps, utilizing the mobility in space of the machining head.

A tool magazine of a known type, particularly appreciated for its reliability, comprises a motorized tool holding drum. In the case of a spindle with a horizontal axis, the tool holding drum can be arranged in front of the spindle so that its axis is horizontal and at right angles to the axis of the spindle, so as to present to the latter the tools to be picked up.

In order to increase productivity, the machining center can also be provided with multiple parallel spindles mounted on a single machining head, so as to machine multiple workpieces simultaneously.

DE 10 2006 063037 B3 discloses a machining center provided with two machining heads which can move along the three Cartesian axes and support respective tool holding spindles, with a rotatable workpiece holding table, and with two mechanized tool magazines which are supported at the opposite longitudinal ends of the machining center and are accessible by the tool holding spindles.
Machining centers of the above cited type, while highly appreciated for their machining precision and their productivity - since they can perform numerous machining processes on the workpiece with a single positioning operation - however have the limitation of being suitable especially for machining medium-small workpieces, e.g., small mechanical parts in the automotive sector or in the industrial sector.

Larger workpieces, such as portions of the chassis or body of a vehicle, currently can be subjected to successive machining processes on different machine tools, with a consequent drastic reduction in productivity and in machining precision, since the workpiece must be repositioned each time it is transferred from one machine tool to the next.

So-called multitasking machines are known which are capable of performing different machining processes on large workpieces, but they too are limited in terms of productivity, since they have a single spindle which can move with respect to multiple axes, e.g., five axes.

Furthermore, known multitasking machines, despite using a single spindle, are extremely bulky and therefore difficult to place within the production facility.

Therefore, the aim of the present invention is to provide a multiple-axis machining center with mechanized tool magazine that is capable of machining large workpieces, such as portions of the chassis or body of vehicles, while having substantially the same machining versatility and the same dimensions as machining centers designed to machine medium-small workpieces.

Within this aim, an object of the invention is to provide a multiple-axis machining center that has a much higher productivity than currently known multitasking machines for machining large workpieces.

This aim and this and other objects that will become better apparent from the description that follows, are achieved by a machining center as claimed in claim 1, while the dependent claims define other advantageous characteristics of the invention.

The invention is now described in greater detail with reference to some preferred but not exclusive embodiments thereof, illustrated by way of non-limiting example in the accompanying drawings, wherein:

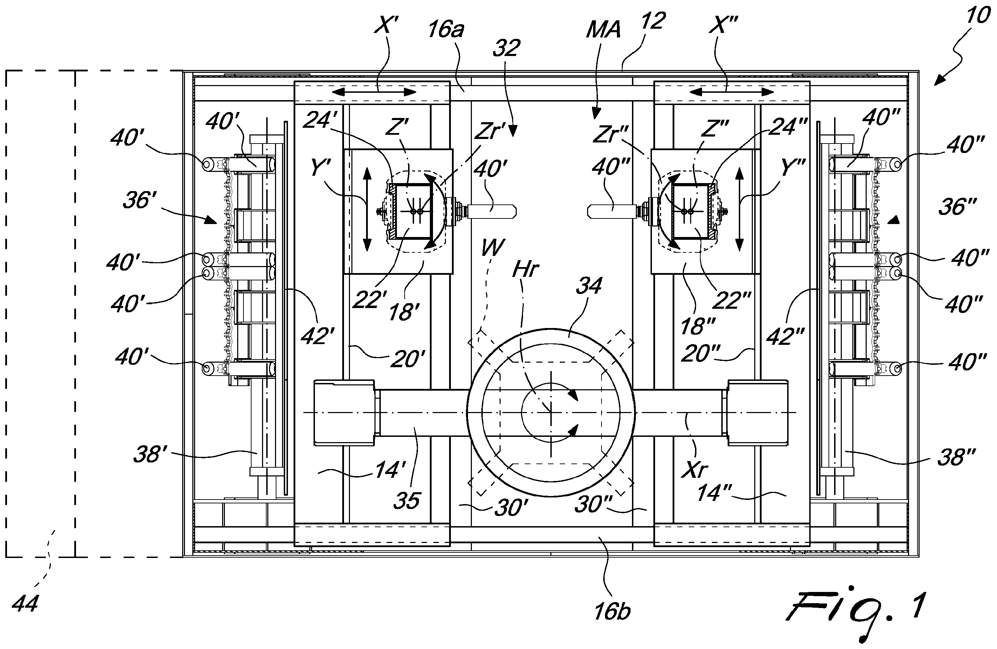

Figure 1 is a schematic plan view of a machining center according to the present invention;
Figure 2 is a schematic lateral elevation view of the machining center of Figure 1.

With reference to the figures, a machining center 10 according to the invention comprises a supporting structure 12, which in the illustrated schematic embodiment has a box-like profile, in which a work area MA is defined.

Two independent carriages 14', 14" are supported so that they can slide by a pair of parallel horizontal rails 16a, 16b, which are fixed in a raised position, preferably at the upper end, of the supporting structure 12 and are extended in a longitudinal direction.

Each of the two carriages 14', 14" can therefore slide along a respective longitudinal translation axis X', X".

Each of the two carriages 14', 14" supports a respective slider 18', 18" which can slide along a respective horizontal guide 20', 20" which is integral with the carriage 14', 14" and is extended along a respective transverse translation axis Y', Y".

Each of the sliders 18', 18" supports a respective machining head 22', 22", which in turn is supported slidingly on a respective vertical guide 24', 24" that is integral with the slider 18', 18" and is extended along a respective vertical translation axis Z', Z".

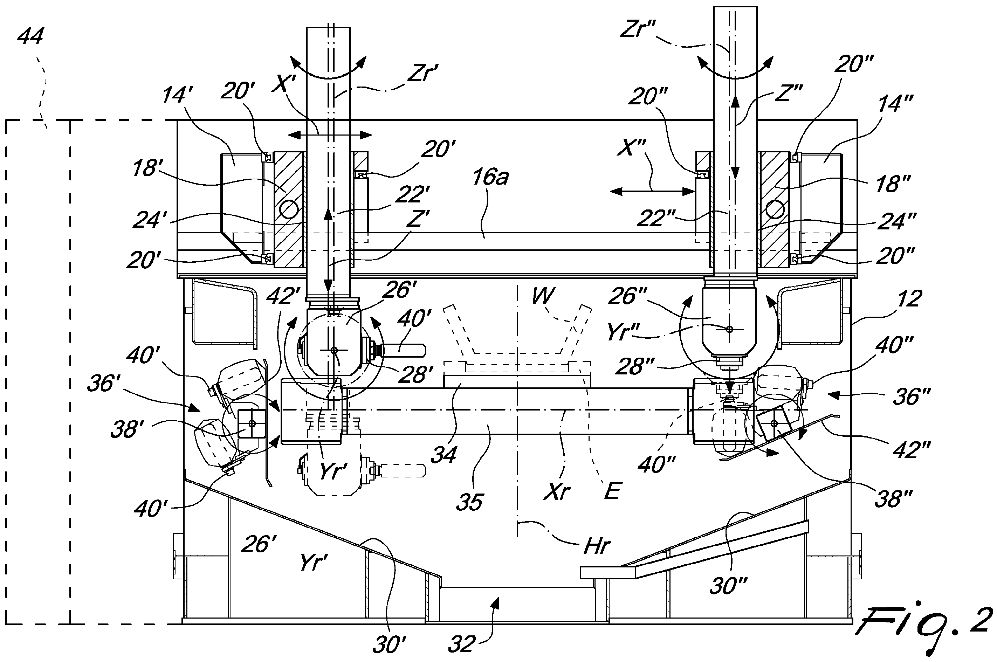

In particular, the machining head 22', 22" is provided, at its lower end, with a fork-like support 26', 26" (Figure 2), by means of which it supports a tool holding spindle 28', 28" so that it can rotate about a horizontal rotation axis Yr', Yr". Preferably, the fork-like support 26', 26" can rotate about a vertical rotation axis Zr', Zr" which is parallel to, or coincides with, the respective vertical translation axis Z', Z".

The spindle 28', 28" can mount different types of tools for machining processes such as milling, boring, tapping, and the like.

According to a preferred embodiment of the invention, the supporting structure 12 has a base which comprises at least one chute which leads into a chip discharge area, advantageously two chutes 30', 30" which are longitudinally mutually opposite and lead into a central chip discharge area 32.

The base 30', 30" supports a rotating tool holding drum 35 the rotation axis Xr of which is extended in a horizontal and longitudinal direction. A workpiece holding table 34 is supported on the workpiece holding drum 35, preferably so that it can rotate about a rotation axis Hr of its own which is perpendicular to the rotation axis of the workpiece holding drum 35.

In this embodiment, the workpiece holding table 34 is advantageously arranged in a position that is centered longitudinally and offset transversely (i.e., the axis of the workpiece holding drum 35 is laterally offset with respect to the centerline of the machining center), for the purposes that will be clarified in greater detail hereinafter.

In a per se known manner, the workpiece W to be machined (shown schematically in dashed lines) can be fixed to the workpiece holding table 34 by means of a workpiece holding fixture E (shown schematically in dashed lines).

The machining center 10 is provided with two mechanized tool magazines 36', 36", which are arranged at the opposite longitudinal ends of the supporting structure 12 so that they can be accessed by the two spindles 28', 28", respectively.

In this embodiment, each of the two tool magazines 36', 36" comprises a rotating tool holding drum 38', 38" which supports peripherally a plurality of tools 40', 40". The rotating tool holding drums 38', 38" are arranged so that their axes are horizontal and parallel to the transverse translation axes Y', Y". In each of the tool magazines 36', 36", the tools 40', 40" are arranged on one, two (as in the illustrated example) or even multiple angularly spaced rows of the respective tool holding drum 38', 38", said rows being extended parallel to the axis of the respective tool holding drum 38', 38".

The spindles 28', 28" automatically pick up the tools 40', 40" to be used in the various machining steps from the respective mechanized tool magazines 36', 36", utilizing the mobility in space of the respective machining heads 22', 22". Depending on where the tool is located on the tool holding drum 38', 38", the drum is rotated so as to present the tools of one row or the other to the respective spindle 28', 28".

Advantageously, each of the tool magazines 36', 36" is provided with a shield 42', 42" which, in this embodiment, is fixed to the respective tool holding drum 38', 38". During machining, the tool holding drum 38', 38" is rotated so as to direct the respective shield 42', 42" toward the work area MA, so as to hide the respective tool magazine 36', 36" and protect it from the machining chips.

In an alternative embodiment, the shields might be movable independently of the respective drums.

Of course, all the above described movable components of the machining center are motorized by means of actuation systems of the conventional type, e.g., electric actuators, hydraulic actuators and/or pneumatic actuators, which are subjected to a control unit (not shown) in a manner which is per se conventional in the field.

An electric/fluidic control unit 44 (shown schematically in dashed lines in the figures) is arranged selectively at one of the two longitudinal ends of the supporting structure 12.

Of course, the supporting structure 12 can be provided with doors and windows for inspection (not shown) on one or more sides, in a manner which is per se conventional in the field.

In operation, the workpiece W to be machined is fixed on the rotating table 34 by means of the fixture E.

The workpiece W can be machined simultaneously by both spindles 28', 28", so as to increase productivity and, in some cases, even double it with respect to known solutions.

For example, the spindles 28', 28" can perform a same operation on two opposite sides of the workpiece W or, being completely independent, different operations by taking tools of a different type from the respective tool magazines 36', 36".

During machining, the shields 42', 42" protect the tool magazines 36', 36" from the machining chips, which therefore falls into the chip collection area 32 via the chutes 30', 30".

The spindles 28', 28" can move along the three Cartesian axes and can furthermore rotate about the respective transverse rotation axes Yr', Yr" and vertical rotation axes Zr', Zr". Additional degrees of freedom are provided by the rotation of the workpiece holding table 34 about its own axis and about the axis of the workpiece holding drum 35, so that any large workpiece, with a single positioning operation, can be machined substantially in any direction and on any side that is directed toward the work area MA.

In an alternative embodiment, the fork-like supports 26', 26" might be nonrotatable about the vertical rotation axes Zr', Zr".

The workpiece holding table 34 also might be mounted so as to be fixed on the workpiece holding drum 35 instead of being rotatable about the axis Hr.

As the person skilled in the art will appreciate, one advantage of the invention is that the two carriages 14', 14" share the same tracks 16a, 16b for translation in a longitudinal direction. In this manner, each of the two spindles 28', 28" can "trespass", in a longitudinal direction, onto the half of the work area that is occupied by the other spindle, thus offering high versatility.

In this preferred embodiment, the transversely offset position of the rotating table allows the spindles 28', 28" to machine workpieces that are even larger (as much as substantially twice the dimensions) with respect to the useful stroke of the horizontal guides 20', 20" (transverse axes Y', Y").

Some preferred embodiments of the invention have been described, but the person skilled in the art may of course apply various modifications and variations within the scope of the claims.

For example, the workpiece holding drum 35 might support two workpiece holding tables so that the two spindles 28', 28" can machine simultaneously two smaller workpieces, each mounted on a respective workpiece holding table. Although the machining center described and illustrated herein has been conceived to machine large workpieces, such as parts of the chassis or body in the automotive, aeronautical, nautical and similar sectors, it has in fact been observed in practice that the same principles can be applied to machining centers for machining medium-small workpieces, achieving several advantages.

Furthermore, the transversely offset position of the workpiece holding table is to be understood as an advantageous but not necessary characteristic of the invention.

The guiding means that allow the translation or rotation of the various movable elements of the machining center may be provided by means of technologies that are commonly used in the field, which are well known to the person skilled in the art, such as rotating supports or sliding supports which use rolling bearings, low-friction sliders, and the like.

The fork-like supports 26', 26" that rotatably support the spindles 28', 28" may of course be replaced with differently shaped rotary support means, e.g., rotating supports provided with a single arm instead of two parallel arms as in the case of the forks.

Although tool magazines of the type described above are particularly appreciated for their reliability, one or both of the tool magazines may of course be of a different type, e.g., chain-type tool magazines.

Finally, the functional order of the translation/rotation axes may of course be varied or reversed with respect to what has been described and illustrated.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machining center, comprising a supporting structure (12), two independent carriages (14', 14") both supported so that they can slide along respective longitudinal translation axes (X', X"), each one of said carriages (14', 14") supporting a respective machining head (22', 22") which can move along a respective transverse translation axis (Y', Y") and along a respective vertical translation axis (Z', Z") by means of respective guiding means (18', 18", 20', 20", 24', 24"), each of said machining heads (22', 22") supporting a respective tool holding spindle (28', 28"), said machining center (10) further comprising a workpiece holding table (34), which is supported at a base (30', 30") of said supporting structure (12) so that it can rotate about a first rotation axis (Xr), and two mechanized tool magazines (36', 36") supported at the opposite longitudinal ends of said supporting structure (12) in order to be accessible by each one of said spindles (28', 28"), **characterized in that** said two independent carriages (14', 14") are supported by a pair of parallel horizontal rails (16a, 16b) which are extended along a longitudinal direction and are fixed in a raised position to said supporting structure (12), each said tool holding spindle (28', 28") is supported so that it can rotate about a horizontal rotation axis (Yr', Yr") by means of rotary support means (26', 26"), and said first rotation axis (Xr) is extended in a horizontal and longitudinal direction.

2. The machining center (10) according to claim 1, **characterized in that** said guiding means comprise, for each one of said carriages (14', 14"), a slider (18', 18") which can slide along a respective horizontal guide (20', 20") which is integral with the carriage (14', 14") and is extended in a transverse direction, and, for each one of said sliders (18', 18"), a vertical guide (24', 24") which is integral with the slider (18', 18") and is engaged slidingly by a respective one of the machining heads (22', 22").

3. The machining center (10) according to claim 1 or 2, **characterized in that** said rotary support means comprise a fork-like support (26', 26").

4. The machining center (10) according to one or more of claims 1-3, **characterized in that** the base of said supporting structure (12) comprises at least one chute (30', 30") which leads into a chip discharge area (32).

5. The machining center (10) according to claim 4, **characterized in that** said base comprises two longitudinally mutually opposite chutes (30', 30") which lead into a central chip discharge area (32).

6. The machining center (10) according to one or more of the preceding claims, **characterized in that** said workpiece holding table (34) is arranged in a position that is longitudinally centered and transversely offset with respect to the centerline of the machining center.

7. The machining center (10) according to one or more of the preceding claims, **characterized in that** at least one of said tool magazines (36', 36") comprises a rotating tool holding drum (38', 38") which is arranged so that its axis is horizontal and transverse and supports peripherally a plurality of tools (40', 40").

8. The machining center (10) according to claim 7, **characterized in that** each one of said tool magazines (36', 36") is provided with a shield (42', 42") adapted to shelter, during machining, the respective tool magazine (36', 36") from the machining chips.

9. The machining center (10) according to claim 8, **characterized in that** said shield (42', 42") is fixed to the respective tool holding drum (38', 38").

10. The machining center (10) according to one or more of the preceding claims, **characterized in that** each one of said rotary support means (26', 26") can rotate about a vertical rotation axis (Zr', Zr") which is parallel to, or coincides with, the respective vertical translation axis (Z', Z").

11. The machining center (10) according to one or more of the preceding claims , **characterized in that** said workpiece holding table (34) is supported so that it can also rotate about a second rotation axis (Hr) which is perpendicular to the first rotation axis (Xr).

## Patentansprüche

1. Ein Bearbeitungszentrum, das Folgendes umfasst: eine tragende Struktur (12), zwei unabhängige Schlitten (14', 14"), beide so gelagert, dass sie entlang entsprechender Translations-Längsachsen (X', X") gleiten können, wobei jeder der Schlitten (14', 14") einen dazugehörigen Bearbeitungskopf (22', 22") trägt, welcher sich entlang einer entsprechenden Translations-Querachse (Y', Y") und entlang einer entsprechenden Translations-Vertikalachse (Z', Z") mit Hilfe entsprechender Führungsmittel (18', 18", 20', 20", 24', 24") bewegen kann; wobei jeder der Bearbeitungsköpfe (22', 22") eine dazugehörige Werkzeughaltespindel (28', 28") trägt; wobei das Bearbeitungszentrum (10) weiter einen Werkstückhaltetisch (34) umfasst, der an einer Basis (30', 30") der tragenden Struktur (12) so gelagert ist, dass er sich um eine erste Drehachse (Xr) drehen kann; und zwei mechanisierte Werkzeugmagazine (36', 36"), gelagert an den gegenüberliegenden Längsenden der tragenden Struktur (12), um für jede der Spindeln (28', 28") erreichbar zu sein; **dadurch gekennzeichnet, dass** die zwei unabhängigen Schlitten (14', 14") von einem Paar paralleler horizontaler Schienen (16a, 16b) getragen sind, die sich entlang einer Längsrichtung erstrecken und in einer erhöhten Position mit Bezug auf die tragende Struktur (12) befestigt sind; wobei jede Werkzeughaltespindel (28', 28") durch Drehlagerungsmittel (26', 26") so gelagert ist, dass sie sich um eine horizontale Drehachse (Yr', Yr") drehen kann, und die erste Drehachse (Xr) sich in einer horizontalen Längsrichtung erstreckt.

2. Das Bearbeitungszentrum (10) gemäß Anspruch 1, **dadurch gekennzeichnet, dass** die Führungsmittel für jeden der Schlitten (14', 14") ein Gleitstück (18', 18") umfassen, das entlang einer entsprechenden horizontalen Führung (20', 20") gleiten kann, das mit dem Schlitten (14', 14") integral ist und sich in eine transversale Richtung erstreckt; und für jedes der Gleitstücke (18', 18") eine vertikale Führung (24', 24"), die integral mit dem Gleitstück (18', 18") ist und in gleitendem Eingriff mit einem jeweiligen der Bearbeitungsköpfe (22', 22") steht.

3. Das Bearbeitungszentrum (10) gemäß Anspruch 1 oder 2, **dadurch gekennzeichnet, dass** die Drehlagerungsmittel eine gabelartige Halterung (26', 26") umfassen.

4. Das Bearbeitungszentrum (10) gemäß einem oder mehreren der Ansprüche 1-3, **dadurch gekennzeichnet, dass** die Basis der tragenden Struktur (12) mindestens eine Rutsche (30', 30") umfasst, die in einen Spanauslassbereich (32) führt.

5. Das Bearbeitungszentrum (10) gemäß Anspruch 4, **dadurch gekennzeichnet, dass** die Basis zwei einander in Längsrichtung einander gegenüberliegende Rutschen (30', 30") umfasst, die in einen zentralen Spanauslassbereich (32) führen.

6. Das Bearbeitungszentrum (10) gemäß einem oder mehreren der obigen Ansprüche, **dadurch gekennzeichnet, dass** der Werkstückhaltetisch (34) in einer Position angeordnet ist, die in Längsrichtung zentriert und mit Bezug auf die Mittellinie des Bearbeitungszentrums quer versetzt ist.

7. Das Bearbeitungszentrum (10) gemäß einem oder mehreren der obigen Ansprüche, **dadurch gekennzeichnet, dass** mindestens eines der Werkzeugmagazine (36', 36") eine Drehwerkzeughaltetrommel (38', 38") umfasst, die so angeordnet ist, dass ihre Achse horizontal und quer liegt, und an ihrer Peripherie eine Vielzahl von Werkzeugen (40', 40") trägt.

8. Das Bearbeitungszentrum (10) gemäß Anspruch 7, **dadurch gekennzeichnet, dass** jedes der Werkzeugmagazine (36', 36") mit einer Abschirmung (42', 42") versehen ist, die ausgebildet ist, um während der Bearbeitung das jeweilige Werkzeugmagazin (36', 36") vor den während der Bearbeitung anfallenden Spänen zu schützen.

9. Das Bearbeitungszentrum (10) gemäß Anspruch 8, **dadurch gekennzeichnet, dass** die Abschirmung (42', 42") an der entsprechenden Drehwerkzeughaltetrommel (38', 38") befestigt ist.

10. Das Bearbeitungszentrum (10) gemäß einem oder mehreren der obigen Ansprüche, **dadurch gekennzeichnet, dass** jedes der Drehlagerungsmittel (26', 26") sich um eine vertikale Drehachse (Zr', Zr") drehen kann, die parallel zur entsprechenden vertikalen Translationsachse (Z', Z") ist oder mit ihr zusammenfällt.

11. Das Bearbeitungszentrum (10) gemäß einem oder mehreren der obigen Ansprüche, **dadurch gekennzeichnet, dass** der Werkstückhaltetisch (34) so gelagert ist, dass er sich auch um eine zweite Drehachse (Hr) drehen kann, die senkrecht zur ersten Drehachse (Xr) ist.

## Revendications

1. Centre d'usinage, comprenant une structure de support (12), deux chariots indépendants (14', 14'') tous deux montés de manière à pouvoir coulisser le long d'axes de translation longitudinaux respectifs (X', X"), chacun desdits chariots (14', 14") supportant une tête d'usinage respective (22', 22") pouvant se déplacer le long d'un axe de translation transversal respectif (Y', Y") et le long d'un axe de translation vertical respectif (Z', Z'') au moyen de moyens de guidage respectifs (18', 18", 20', 20", 24', 24''), chacune desdites têtes d'usinage (22', 22") supportant une broche porte-outil respective (28', 28"), ledit centre d'usinage (10) comprenant en outre une table de support de pièce à usiner (34), qui est supportée au niveau d'une base (30', 30") de ladite structure de support (12) de manière à pouvoir tourner autour d'un premier axe de rotation (Xr), et deux magasins d'outils mécanisés (36', 36'') supportés aux extrémités longitudinales opposées de ladite structure de support (12) afin d'être accessibles par chacune desdites broches (28', 28"), **caractérisé en ce que** lesdits deux chariots indépendants (14', 14'') sont supportés par une paire de rails horizontaux parallèles (16a, 16b) qui s'étendent dans une direction longitudinale et sont fixés en position surélevée à ladite structure de support (12), chacune desdites broches porte-outil (28', 28'') est supportée de manière à pouvoir tourner autour d'un axe de rotation horizontal (Yr', Yr") au moyen de moyens de support rotatifs (26', 26"), et ledit premier axe de rotation (Xr) s'étend dans une direction horizontale et longitudinale.

2. Centre d'usinage (10) selon la revendication 1, **caractérisé en ce que** lesdits moyens de guidage comprennent, pour chacun desdits chariots (14', 14"), un coulisseau (18', 18") pouvant coulisser le long d'un guide horizontal respectif (20', 20") solidaire du chariot (14', 14'') et s'étendant dans une direction transversale, et, pour chacun desdits coulisseaux (18', 18"), un guide vertical (24', 24") qui est solidaire du coulisseau (18', 18") et avec lequel l'une respective des têtes d'usinage (22', 22") est en prise de manière coulissante.

3. Centre d'usinage (10) selon la revendication 1 ou 2, **caractérisé en ce que** lesdits moyens de support rotatifs comprennent un support en forme de fourche (26', 26'').

4. Centre d'usinage (10) selon l'une ou plusieurs des revendications 1 à 3, **caractérisé en ce que** la base de ladite structure de support (12) comprend au moins une goulotte (30', 30") qui débouche dans une zone d'évacuation des copeaux (32).

5. Centre d'usinage (10) selon la revendication 4, **caractérisé en ce que** ladite base comprend deux goulottes (30', 30") situées longitudinalement à l'opposé l'une de l'autre qui débouche dans une zone centrale d'évacuation des copeaux (32).

6. Centre d'usinage (10) selon l'une ou plusieurs des revendications précédentes, **caractérisé en ce que** ladite table de support de pièce à usiner (34) est disposée dans une position centrée longitudinalement et décalée transversalement par rapport à l'axe central du centre d'usinage.

7. Centre d'usinage (10) selon une ou plusieurs des revendications précédentes, **caractérisé en ce qu'**au moins l'un desdits magasins d'outils (36', 36") comprend un tambour porte-outils rotatif (38', 38") qui est disposé de telle sorte que son axe soit horizontal et transversal et qui supporte à sa périphérie une pluralité d'outils (40', 40'').

8. Centre d'usinage (10) selon la revendication 7, **caractérisé en ce que** chacun desdits magasins d'outils (36', 36") est muni d'un écran de protection (42', 42") adapté pour protéger, pendant l'usinage, le magasin d'outils respectif (36', 36") des copeaux d'usinage.

9. Centre d'usinage (10) selon la revendication 8, **caractérisé en ce que** ledit écran de protection (42', 42'') est fixé au tambour porte-outils respectif (38', 38").

10. Centre d'usinage (10) selon une ou plusieurs des revendications précédentes, **caractérisé en ce que** chacun desdits moyens de support rotatifs (26', 26") peut tourner autour d'un axe de rotation vertical (Zr', Zr") qui est parallèle à l'axe de translation vertical respectif (Z', Z"), ou coïncide avec celui-ci.

11. Centre d'usinage (10) selon une ou plusieurs des revendications précédentes, **caractérisé en ce que** ladite table de support de pièce à usiner (34) est supportée de manière à pouvoir également tourner autour d'un deuxième axe de rotation (Hr) qui est perpendiculaire au premier axe de rotation (Xr).
